# NEUE EUROPÄISCHE PATENTSCHRIFT

(11) **EP 1 204 505 B2**
(45) Veröffentlichungstag und Bekanntmachung des Hinweises auf die Entscheidung über den Einspruch: **31.07.2013**
(45) Hinweis auf die Patenterteilung: 23.04.2003
(21) Anmeldenummer: 99952434.1
(22) Anmeldetag: 17.08.1999
(51) Int. Cl.: B23D 61/12, B23D 61/02

(54) **SÄGEBLATT MIT GRUPPEN VON ZÄHNEN UNTERSCHIEDLICHER BREITEN ODER HÖHEN**
SAW BLADE WITH GROUPS OF TEETH OF DIFFERENT WIDTHS OR HEIGHTS
LAME DE SCIE DOTEE DE GROUPES DE DENTS DE DIFFERENTES LARGEURS ET HAUTEURS

(43) Veröffentlichungstag der Anmeldung: 15.05.2002
(73) Patentinhaber: J.N. Eberle&Cie. GmbH, 86157 Augsburg (DE)
(72) Erfinder: HANDSCHUH, Herbert, D-72666 Neckarteilfingen (DE); SCHWEIZER, Albert, D-72631 Aichtal (DE); GEHRMANN, Hilmar, D-58256 Ennepetal (DE)
(74) Vertreter: Bosch, Matthias
(86) Internationale Anmeldenummer: PCT/DE1999/002587
(87) Internationale Veröffentlichungsnummer: WO 2001/012371

(56) Entgegenhaltungen:
- EP-B1- 0 551 104
- EP-B1- 0 610 647
- WO-A-98/45076
- DE-A1- 2 516 137
- DE-A1- 3 611 063
- DE-C2- 4 200 423
- US-A- 3 576 200
- US-A- 4 011 783

## Beschreibung

Die Erfindung betrifft ein Sägeblatt mit einem Grundkörper, auf dem ungeschränkte Zähne mit Schneiden angeordnet sind, die symmetrisch zur-Längsmittelebene des Grundkörpers ausgebildet sind, wobei die Zähne in sich wiederholenden Gruppen zu mindestens zwei Gruppen von Zähnen angeordnet sind, von denen die Zähne der ersten Gruppe aus mindestens zwei Zähnen bestehen und eine von Zahn zu Zahn zunehmende Höhe und gleichzeitig abnehmende Breite aufweisen.

Beim Sägen fester, insbesondere metallischer Werkstoffe treten an den Sägezähnen hohe Reibungs- und Stoßbelastungen auf. Aufgrund dieser hohen Belastungen sind die Sägezähne aus extrem hartem Material gefertigt. Um die Belastungen an den Sägezähnen zu verringern, ist es in der Kreissägen- und Bandsägenindustrie üblich, ungeschränkte Zähne in Verbindung mit verschiedenen Zahnspitzenformen als Vor- und Nachschneidergeometrie zu verwenden. Dieses Prinzip beinhaltet aufeinander folgende Zahngruppen von jeweils zwei Zähnen, von denen der jeweils der erste Zahn - Vorschneider genannt - seitlich stark angephast und etwas länger als der folgende, nur minimal angephaste zweite Zahn - Nachschneider genannt - ist.

Ein Sägeblatt der eingangs genannten Art ist bekannt (vgl. WO 98 45076 A). Bei dem bekannten Sägeblatt sind die Gruppen von Zähnen nicht miteinander verschachtelt. Die Zähne jeder Gruppe weisen eine von Zahn zu Zahn zunehmende Höhe und gleichzeitig abnehmende Breite auf. Bei einem anderen bekannten Sägeblatt (vgl. DE-A 43 00 622) sind mindestens zwei Gruppen von Zähnen ineinandergeschachtelt angeordnet. Die erste der beiden Gruppen weist eine von Zahn zu Zahn abnehmende Höhe und dabei zunehmende Breite auf. In der zweiten Gruppe sind die Zähne identisch ausgebildet und stellen die Zähne mit der größten Breite und geringsten Höhe dar.

Der Erfindung liegt die Aufgabe zugrunde, ein Sägeblatt der eingangs genannten Art zu schaffen, das eine geringe Stoßempfindlichkeit aufweist, einem geringen Verschleiß unterliegt, gleichzeitig einen stabilen Gradlauf im Schnittkanal sowie eine gute Oberflächengüte erzeugt; wobei die Rauhigkeit der erzeugten Oberfläche im Schnittkanal geringer als bisher ist. Gemäß der Erfindung wird diese Aufgabe bei einem Sägeblatt der eingangs genannten Art dadurch gelöst, dass die Zähne der zweiten Gruppe die Zähne mit der größten Breite darstellen, dass zwischen jeweils zwei Zähnen der ersten Gruppe ein Zahn der zweiten Gruppe angeordnet ist, und dass die Zähne der zweiten Gruppe eine Höhe haben, die gleich der Höhe des vorangegangenen Zahnes der ersten Gruppe ist.

Mit der Erfindung ist ein Sägeblatt geschaffen, welches eine geringere Stoßempfindlichkeit aufweist und einem geringeren Verschleiß unterliegt. Gleichzeitig wird ein stabiler Gradlauf im Schnittkanal sowie eine gute Oberflächengüte erzeugt. Darüber hinaus sind die normalerweise beim Sägen auftretenden Schwingungsvibrationen reduziert. Die Lebensdauer ist bei gleichzeitiger Verbesserung des Schneidergebnisses erhöht. Im Einzelnen ergeben sich bei der Erfindung folgende erfindungswesentliche Vorteile:

An den Kanten herrscht der größte Werkzeugverschleiß, weil die Kanten sehr stark arbeiten müssen. Wenn aber nach jedem Zahn der ersten Gruppe ein Zahn der zweiten Gruppe gesetzt wird, der die gleiche Höhe hat, wie der vorangegangene Zahn der ersten Gruppe aber die größte Breite, wird der Werkzeugverschleiß minimiert. Es wird Material gespart, weil zunächst zwei kurze breite Zähne hintereinander folgen. Die werden gesetzt, weil der Vorschub zu berücksichtigen ist. Jeder Zahn schneidet auf jeden Fall, weil das Band gleichzeitig eine Vorwärts- und Abwärtsbewegung macht. Auf die Zähne 1, 3, 5 und 7, das sind die Zähne der ersten Gruppe mit ansteigender Höhe und schmalere Breite, folgt jeweils ein Zahn 2, 4, 6 und 8, der jeweils die Höhe des vorangegangenen Zahnes der ersten Gruppe hat, aber identische Breite verglichen mit den Zähnen der selben Gruppe. Bei den genannten Zahlen ergibt sich eine 16-Span-Geometrie. Im Stand der Technik werden 7 Späne mit 4 Zähnen gefahren; in der genannten Ausgestaltung der Erfindung 15 Späne mit 8 Zähnen.

Weitere Ausgestaltungen und Weiterbildungen der Erfindung sind in weiteren Unteransprüchen beschrieben. Ein Ausführungsbeispiel der Erfindung ist in der Zeichnung dargestellt und wird nachfolgend im einzelnen erläutert. Es zeigen:
- Fig. 1:: eine Seitenansicht eines Ausschnittes eines Sägeblatts mit vier Zähnen der ersten Gruppe, die zunehmende Höhe und abnehmende Breite aufweisen, und mit vier Zähnen der zweiten Gruppe, die jeweils zwischen zwei Zähnen der ersten Gruppe angeordnet sind, die größte Breite und eine Höhe aufweisen, die gleich der Höhe des vorangegangenen Zahnes der ersten Gruppe ist;
- Fig. 2:: eine zu Figur 1 gehörende Draufsicht;
- Fig. 3:: eine ebenfalls zu Figur 1 gehörende Draufsicht, bei der die Breite zu den einzelnen Zähnen vermaßt ist;
- Fig. 4:: ein Brustbild der Zähne der zweiten Gruppe;
- Fig. 5:: ein Brustbild der Zähne der ersten Gruppe;
- Fig. 6:: ein Brustbild der Kombination aus den Brustbildern der Figuren 4 und 5;
- Fig. 7:: die Höhen der in der Kombination verwendeten Zähne;
- Fig. 8:: in vergrößerter Darstellung das Brustbild der Kombination nach Figur 6 mit bezifferten Zähnen;
- Fig. 9:: eine Seitenansicht eines weiteren Ausschnittes eines Sägeblatts mit drei Zähnen der ersten Gruppe, die zunehmende Höhe und abnehmende Breite aufweisen, und mit drei Zähnen der zweiten Gruppe, die jeweils zwischen zwei Zähnen der ersten Gruppe angeordnet sind, die untereinander gleich ausgebildet sind und die größte Breite aufweisen; nicht gemäß Anspruch.
- Fig. 10:: eine zu Figur 9 gehörende Draufsicht im Ausschnitt.

Die als Ausführunsbeispiel gewählten Sägeblätter weisen einen Grundkörper 1 auf. Auf dem Grundkörper 1 sind ungeschränkte Zähne 2 angeordnet. Die Zähne 2 sind zu jeweils zwei Gruppen aus mindestens zwei Zähnen zusammengefaßt.

Jeder Zahn 2 weist an seinem dem Grundkörper 1 abgewandten Ende einen Zahnrükken 21 auf. Auf der in Schneidrichtung X zugewandten Seite weist jeder Zahn 2 eine Zahnbrust 22 auf. Die Zahnbrust 22 ist unter einem Spanwinkel α zur Vertikalen angeordnet. Der Spanwinkel kann innerhalb einer Zahngruppe variieren. Er ist in einem Bereich angesiedelt, der von der Vertikalen entgegen dem Uhrzeigersinn wandert. Der Zahnrücken 21 eines jeden Zahns 2 ist unter einem Freiwinkel β zur Horizontalen des Sägeblatts angeordnet. Der Freiwinkel β ist immer größer als 0°.
Der Zahnrücken 21 und die Zahnbrust 22 eines jeden Zahns 2 sind unter einem Keilwinkel γ zueinander angeordnet, der in jedem Fall kleiner 90° ist.

Die Zähne 2 weisen einen Phasenwinkel δ auf. Der Phasenwinkel δ kann in einem Bereich zwischen 5° und 60° gewählt werden. Auch kann der Phasenwinkel δ innerhalb einer Zahngruppe von Zahn zu Zahn variieren.

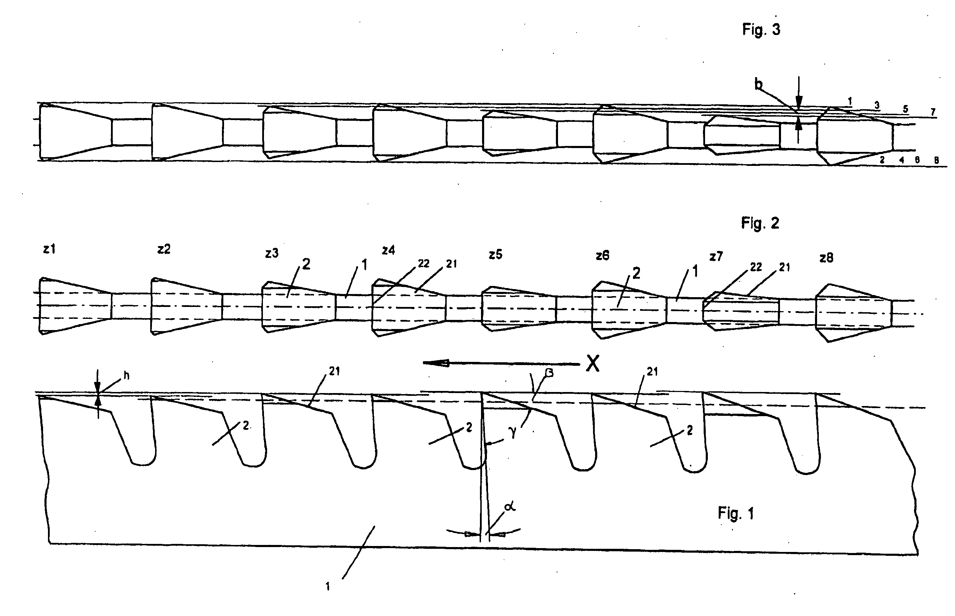

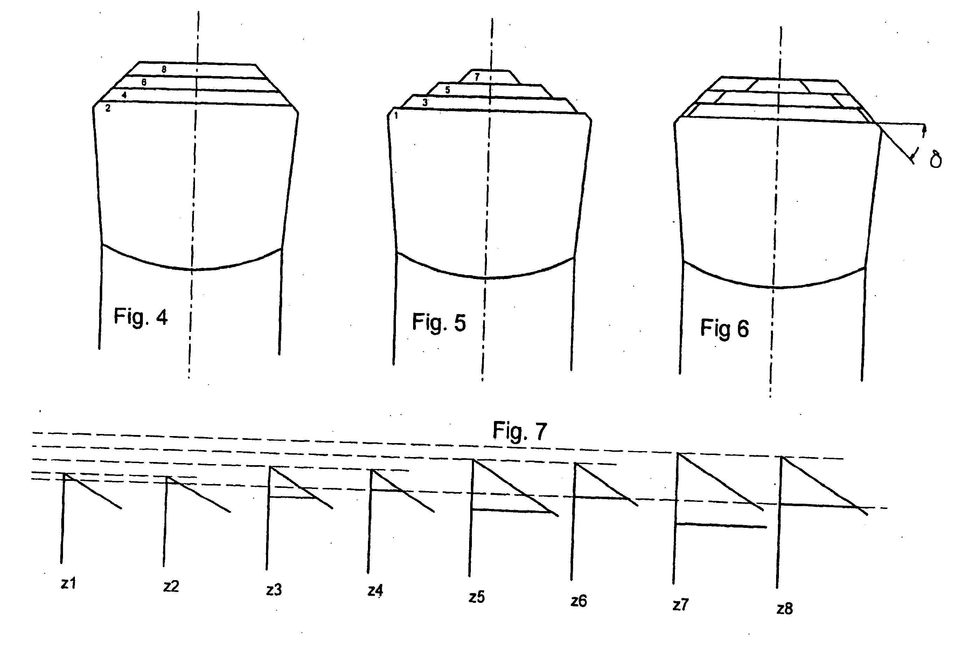

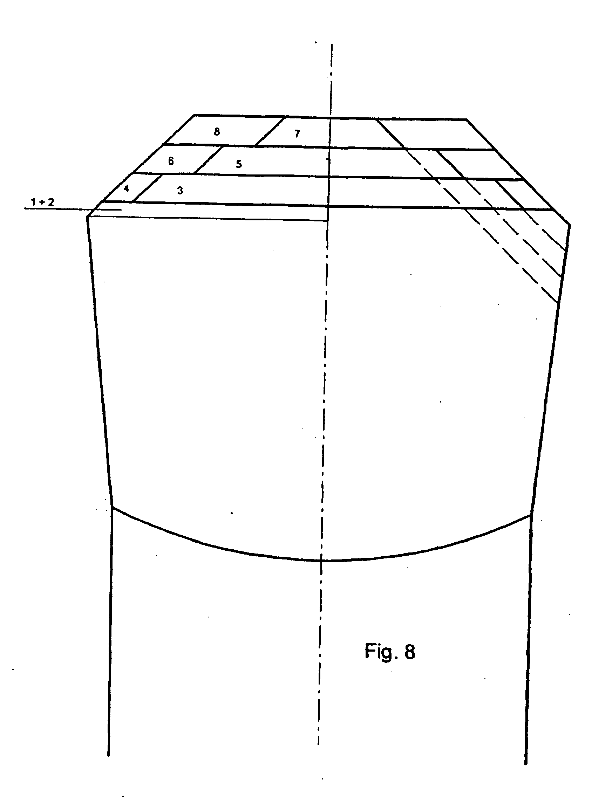

Bei der Ausführung nach Figur 1 bis 8 weisen die zu der ersten Gruppe von Zähnen zusammengefaßten Zähne z1, z3, z5 und z7 eine von Zahn zu Zahn zunehmende Höhe h auf. Gleichzeitig nimmt die Breite b der zu der Gruppe zusammengefaßten Zähne z1, z3, z5 und z7 ab. Daraus ergibt sich, daß der niedrigste Zahn z1 der ersten Gruppe gleichzeitig der breiteste, der höchste Zahn z7 der schmalste Zahn ist. Die Zunahme der Höhe von Zahn zu Zahn beträgt mindestens 1/1000 mm, höchstens 5/100 mm. Die abnehmende Breite ist vorhanden, um einem folgenden Zahn im Schnittkanal vom vorschneidenden Zahn seitlich zu trennen.

Die zu der zweiten Gruppe von Zähnen zusammengefaßten Zähne z2, z4, z6 und z8 weisen eine von Zahn zu Zahn zunehmende Höhe h auf. Die Höhe eines Zahnes, z. B. z2, ist gleich der Höhe des vorangegangenen Zahnes z1 der ersten Gruppe. Die Breite b der Zähne der zweiten Gruppe ist gleich; die Zähne z2, z4, z6 und z8 haben übereinstimmend die größte Breite der Zähne des Sägebandes.

Innerhalb der Zahnfolge beginnt es zunächst mit dem Zahn z1 aus der ersten Gruppe und dem Zahn z2 der zweiten Gruppe gleich dahinter. Dann kommen Zahn z3 aus der ersten Gruppe und z4 aus der zweiten Gruppe; danach aus der ersten Gruppe der Zahn z5. Bevor Zahn z5 wirkt, macht Zahn z4 aus der zweiten Gruppe den Schnittkanal wieder frei. Der Zahn z5 aus der ersten Gruppe hat dadurch weniger zu arbeiten. Nach z5 kommt z6, dann z7 der ersten Gruppe und schließlich z8 der zweiten Gruppe.

Zusammengefaßt ist bei dieser Ausgestaltung zwischen jeden der Zähne der ersten Gruppe ein kurzer breiter Zahn der zweiten Gruppe gesetzt. Die Zähne der ersten Gruppe haben ansteigende Höhe nach hinten und nach hinten abnehmende Breite. Insgesamt gesehen hat das Sägeband nur ansteigende Höhen. Die Breite, die Phase, wird zwar immer länger, aber die Phase endet immer wieder auf der Kante. Die Phasen sind nur größer, weil der Zahn nach hinten länger herausragt. Im Ergebnis heißt dies aufsteigende Höhe und gleiche Breite. Dieses Ergebnis wird erzielt durch die Kombination der Zähne der ersten Gruppe mit den Zähnen der zweiten Gruppe.

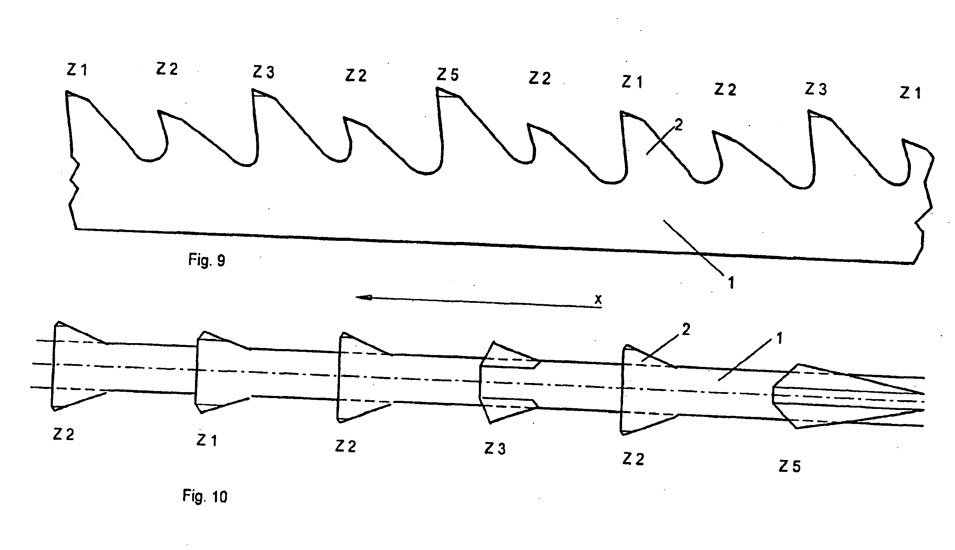

Bei dem anderen Ausführungsbeispiel - Figuren 9 und 10 - nicht gemäß Anspruch. - sind die Zähne 2 der zweiten Gruppe, also die Zähne z2, untereinander gleich ausgebildet. Sie haben die größte Breite b und die kleinste Höhe h der Zähne des Sägebandes. Die Zähne der ersten Gruppe, also die Zähne z1, z3 und z5, haben eine von Zahn zu Zahn zunehmende Höhe h und abnehmende Breite b.

Die Zähne 2 sind zu zwei Gruppen von Zähnen aus jeweils mindestens zwei Zähnen zusammengefaßt. Die Gruppen von Zähnen wiederholen sich zyklisch auf dem Sägeband. Dabei ist es möglich, daß jeweils identische Gruppen von Zähnen aufeinander folgen. Es besteht darüber hinaus die Möglichkeit, daß die aufeinanderfolgenden Zahngruppen jeweils eine unterschiedliche Anzahl von Zähnen aufweisen. Die Gruppen von Zähnen sind miteinander verschachtelt. Die Teilung des Sägeblattes, also der Abstand der Zähne untereinander, kann konstant oder variabel gewählt werden.

## Patentansprüche

1. Sägeblatt mit einem Grundkörper (1), auf dem ungeschränkte Zähne (2) mit Schneiden angeordnet sind, die symmetrisch zur Längsmittelebene des Grundkörpers (1) ausgebildet sind, wobei die Zähne (2) in sich wiederholenden Gruppen zu mindestens zwei Gruppen von Zähnen angeordnet sind, von denen die Zähne der ersten Gruppe aus mindestens zwei Zähnen bestehen und eine von Zahn zu Zahn zunehmende Höhe und gleichzeitig abnehmende Breite aufweisen, **dadurch gekennzeichnet, dass** die Zähne der zweiten Gruppe die Zähne mit der größten Breite darstellen, dass zwischen jeweils zwei Zähnen der ersten Gruppe ein Zahn der zweiten Gruppe angeordnet ist, und dass die Zähne (2) der zweiten Gruppe eine Höhe haben, die gleich der Höhe des vorangegangenen Zahnes der ersten Gruppe ist.

## Claims

1. A saw blade comprising a base body (1) having non-set teeth (2) with cutting edges arranged thereon which are formed to be symmetrical to the longitudinal center plane of the base body (1), wherein the teeth (2) are arranged in recurring groups of at least two groups of teeth, the teeth of the first group consisting of at least two teeth and having a height increasing from tooth to tooth and a simultaneously decreasing breadth, **characterized in that** the teeth of the second group constitute the teeth with the largest breadth, that a tooth of the second group is positioned between every two teeth of the first group, and that the teeth (2) of the second group have a height equal to the height of the preceding tooth of the first group.

## Revendications

1. Lame de scie comprenant un corps de base (1) sur lequel sont agencées des dents (2) non avoyées et présentant des arêtes de coupe, qui sont d'une configuration symétrique par rapport au plan médian longitudinal du corps de base (1), les dents (2) étant agencées en des groupes qui se répètent, selon au moins deux groupes de dents, dont les dents du premier groupe sont constituées d'au moins deux dents et présentent une hauteur croissante et simultanément une largeur décroissante de dent en dent, **caractérisée en ce que** les dents du deuxième groupe constituent les dents avec la plus grande largeur, **en ce qu'**une dent du deuxième groupe est agencée respectivement entre deux dents du premier groupe, et **en ce que** les dents (2) du deuxième groupe présentent une hauteur qui est égale à la hauteur de la dent précédente du premier groupe.
